# EUROPÄISCHE PATENTSCHRIFT

(11) **EP 0 687 277 B1**
(45) Veröffentlichungstag und Bekanntmachung des Hinweises auf die Patenterteilung: **18.06.1997**
(21) Anmeldenummer: 94909915.4
(22) Anmeldetag: 03.03.1994
(51) Int. Cl.: C08F 291/00, C08F 255/02, C09D 151/00, C09J 151/00

(54) **VERFAHREN ZUR HERSTELLUNG VON KERN-HÜLLE-COPOLYMERISAT-DISPERSIONEN, DEREN HÜLLE HYDROLISIERBARE, SILICIUMORGANISCHE COMONOMERE ENTHÄLT**
METHOD FOR THE PREPARATION OF CORE-SHELL COPOLYMER DISPERSIONS WHOSE SHELL CONTAINS HYDROLYSABLE SILICIUM-ORGANIC COMONOMERS
METHODE DE PREPARATION DE COPOLYMERES A NOYAU ET ENVELOPPE DONT L'ENVELOPPE CONTIENT DES COMONOMERES HYDROLYSABLES EN SILICIUM ORGANIQUE

(30) Priorität: 04.03.1993 DE 4306831
(43) Veröffentlichungstag der Anmeldung: 20.12.1995
(73) Patentinhaber: Wacker-Chemie GmbH, 81737 München (DE)
(72) Erfinder: BASTELBERGER, Thomas, D-84547 Emmerting (DE); LUTZ, Hermann, D-84547 Emmerting (DE); HEILING, Peter, D-84489 Burghausen (DE)
(74) Vertreter: Schuderer, Michael
(86) Internationale Anmeldenummer: EP9400624
(87) Internationale Veröffentlichungsnummer: WO9420556

(56) Entgegenhaltungen:
- EP-A- 0 035 332
- US-A- 5 120 889

## Beschreibung

Die Erfindung betrifft Kem-Hülle-Copolymerisat-Dispersionen, deren Hülle hydrolisierbare, siliciumorganische Comonomere enthält, Verfahren zu deren Herstellung sowie deren Verwendung als Bindemittel für Anstrichfarben, Putze und Fliesenkleber mit guter Wasserfestigkeit.

Silanolgruppen enthaltende Comonomere werden, zur Verbesserung der Naßhaftung in der Anwendung als Beschichtungsmittel, in die Copolymerisate von Kunststoffdispersionen einpolymerisiert. Nach der herrschenden Lehrmeinung werden hinsichtlich ihrer Wasserbeständigkeit qualitativ hochwertige Bindemittel dadurch erhalten, daß eine hydrolysierbare, siliciumorganische Verbindung zusammen mit der Hauptmenge der eingesetzten Monomeren polymerisiert wird. Im Stand der Technik sind dazu eine Reihe von Verfahren beschrieben.

In der US-A 3814716 werden Polymerdispersionen auf Basis Vinylacetat, Acrylester, Malein- und/oder Fumarsäureester mit 0.5 - 5 % eines copolymerisierbaren Silans beschrieben. Das Silan wird in der Gesamtmenge der eingesetzten Monomeren gelöst und die Monomeren einschließlich des Silans teilweise vorgelegt und teilweise langsam während der Polymerisation dosiert.

Aus der DE-PS 2148457 (GB-A 1407827) ist die Verwendung von silanolgruppenhaltigen Dispersionen als Bindemittel von Bautenbeschichtungsmitteln bekannt. Es werden Polymerisate aus Vinylestern, Acrylestern oder Butadien/Styrol-Copolymeren verwendet, in die Silanolgruppen einpolymerisiert sind und welche hervorragende Haftung auf mineralischen Substraten zeigen. Die Herstellung solcher silanolgruppenhaltiger Vinylesterpolymerisate ist Gegenstand der DE-PS 2148458 (GB-A 1407827). Hier wird gelehrt, die Polymerisate nach dem Emulsionspolymerisationsverfahren herzustellen, wobei die siliciumorganischen Monomere während der Polymerisation zudosiert werden, da andernfalls, bei Vorlage des Silans, die Dispersion Koagulate enthalten und ihre Haftungseigenschaften verlieren würde.

Die DE-A 3803450 (AU-A 89/29590) betrifft emissionsarme Kunststoffdispersionen auf der Basis von ethylenisch ungesättigten Comonomeren und 0.05 bis 2 Gew% ethylenisch ungesättigten, hydrolisierbaren, organischen Siliciumverbindungen. Die Herstellung erfolgt nach dem Emulsionspolymerisationsverfahren, wobei die Zugabe des Siliciummonomeren beliebig ist und zusammen mit der Comonomerphase oder getrennt, während der gesamten Polymerisationsdauer oder mit der ersten Hälfte und/oder der zweiten Hälfte der Comonomerphase erfolgen kann.

In der DE-A 3834638 (US-A 4886852) wird ein sehr aufwendiges, mehrstufiges Verfahren zur Herstellung einer wäßrigen Dispersion beschrieben. In einer ersten Stufe wird eine nicht-wäßrige Dispersion aus 1 bis 90 Gew% eines Alkoxysilangruppen enthaltenden Vinylmonomeren, 1 bis 25 Gew% einer α,β-ethylenisch ungesättigten Carbonsäure und 9 bis 98 Gew% eines weiteren radikalisch polymerisierbaren ungesättigten Monomeren hergestellt. In einer zweiten Stufe wird mindestens ein weiteres radikalisch polymerisierbares Monomer in einem organischen Lösungsmittel, in dem die gebildeten Polymerteilchen unlöslich sind, in Gegenwart des in Stufe 1 hergestellten Dispersionsstabilisierungsharzes zu einer ebenfalls nicht-wäßrigen Dispersion umgesetzt. In einer dritten Stufe wird die neutralisierte, nicht-wäßrige Dispersion durch Zugabe von Wasser in eine wäßrige Dispersion umgewandelt. Die nach dieser Lehre hergestellten Dispersionen eignen sich auf Grund ihrer guten Wasserfestigkeit als Beschichtungsmassen.

Die EP-A 35332 beschreibt die Verwendung von ungesättigten siliciumorganischen Verbindungen zur Herstellung von Dispersionen, die als Bindemittel in Dispersionsfliesenklebern geeignet sind. Neben der siliciumorganischen Verbindung enthalten die Copolymerisate noch vinylaromatische Monomere und (Meth)acrylat-Monomere. Zur Herstellung wird ein Teil der Monomerphase mit Acrylsäure vorgelegt, der Rest mit der Gesamtmenge an siliciumorganischem Monomer zudosiert.

Die EP-A 327376 betrifft ein Verfahren zur Herstellung von silylgruppenhaltigen Copolymeren von Vinylestern, gegebenenfalls im Gemisch mit weiteren Comonomeren, wie Acrylsäureestern, Ethylen oder Vinylchlorid, welche bei niedrigem Gehalt an Silanmonomer gute Bindemitteleigenschaften zeigen. In dem Verfahren wird ein Teil des Silans zusammen mit einem Teil der übrigen Monomere vorgelegt und der Rest des Silans und der Monomere dosiert. Als besonders vorteilhaft wird die gleichmäßige Verteilung der Silaneinheiten in der Polymerkette angesehen.

Aus der EP-A 444827 ist ein Verfahren bekannt zur Emulsionspolymerisation von Core-Shell-Copolymerisaten, welche einen Kern aus Vinylester/Olefin/Acrylat/Vinylsilan-Copolymer und eine Vinylester/Olefin-Hülle enthalten. Bei der Polymerisation wird ein Gemisch aus Vinylester, Acrylat und Silan teilweise vorgelegt, Ethylen aufgedrückt und der Rest des Comonomergemisches zudosiert. Nach Beendigung der silanhaltigen Monomerdosierung wird eine zweite, silanfreie Vinylesterdosierung gestartet. Mit diesem Verfahren wird die Bildung eines silanhaltigen, hydrophoben Kerns, der durch die Vernetzung über die Silangruppen besondere Festigkeit aufweist, und die Bildung einer silanfreien Hülle erzwungen.

Der vorliegenden Erfindung lag somit die Aufgabe zugrunde, Copolymerdispersionen zur Verfügung zu stellen, bei denen siliciumorganische Comonomere so günstig in das Copolymere eingebaut sind, daß auch mit geringen Anteilen an siliciumorganischem Monomer Copolymerdispersionen mit qualitativ hochwertigen Bindemitteleigenschaften, wie Wasserfestigkeit, Putzhärte bzw. Scheuerbeständigkeit, erhalten werden.

Die Aufgabe wurde mit einer Verfahrensweise gelöst, bei der die ungesättigte siliciumorganische Komponente zusammen mit einer geringen Menge überwiegend hydrophilen Monomers zu einem wasserquellbaren bis alkalilöslichen Schutzkolloid umgesetzt wird, welches anschließend bei der Polymerisation der Hauptmenge des hydrophoben Monomers in Abwesenheit weiterer ungesättigter siliciumorganischer Verbindungen den dadurch gebildeten hydrophoben Kern als Hüllschicht überzieht. Die siliciumorganischen Verbindungen werden hierbei so günstig in das Copolymerisat eingebaut, daß mit ungewöhnlich geringen Mengen an siliciumorganischer Verbindung qualitativ hochwertige Bindemitteleigenschaften erreicht werden.

Gegenstand der Erfindung ist ein Verfahren zur Herstellung von Kern-Hülle-Copolymerisat-Dispersionen, mit Festgehalten von 45 bis 65 %, deren Hülle hydrolysierbare, siliciumorganische Comonomere enthält, wobei der Anteil der Hülle am Kern-Hülle-Copolymerisat 2 bis 25 Gew% beträgt und die Hülle aus einem Copolymerisat besteht, enthaltend
a) 70 bis 95 Gew%, bezogen auf das Gesamtgewicht der Hülle, Acrylsäure- und/oder Methacrylsäure(C₁-bis-C₁₀)alkylester, von denen 20 bis 80 Gew%, bezogen auf das Gesamtgewicht von a), eine Wasserlöslichkeit von höchstens 2 g/l und 80 bis 20 Gew%, bezogen auf das Gesamtgewicht von a), eine Wasserlöslichkeit von mindestens 10 g/l aufweisen,
b) 5 bis 25 Gew%, bezogen auf das Gesamtgewicht der Hülle, eines oder mehrerer ethylenisch ungesättigter, funktioneller und wasserlöslicher Monomeren mit einem Anteil von 25 bis 100 Gew%, bezogen auf das Gesamtgewicht von b), an ungesättigten Carbonsäuren, und
c) 0.01 bis 10 Gew%, bezogen auf das Gesamtgewicht der Hülle, einer oder mehrerer olefinisch ungesättigter, hydrolysierbarer Siliciumverbindungen der allgemeinen Formel R¹-Si(OR²)₃, worin R¹ einen in ω-Stellung olefinisch ungesättigten organischen Rest und R² gleiche oder verschiedene primäre und/oder sekundäre, gegebenfalls mit Alkoxygruppen substituierte Alkyl- oder Acylreste bedeuten,
und deren Kern, mit einem Anteil von 75 bis 98 Gew% am Gesamtgewicht des Kern-Hülle-Copolymerisats, aus einem Polymerisat besteht, enthaltend
d) ein oder mehrere Comonomere aus der Gruppe der Vinylester, Acryl- und/oder Methacrylsäureester, Vinylchlorid, vinylaromatischen Verbindungen, Ethylen.

Als Bestandteile des Gemisches a) eignen sich die Ester der Acryl- und/oder Methacrylsäure mit geradkettigen oder verzweigten aliphatischen C₁- bis C₁₀-Alkoholen, gegebenfalls in Kombination mit den entsprechenden Diestern der Fumar- oder Maleinsäure. Eine Tabelle zur Wasserlöslichkeit dieser Ester findet sich in "Vinyl and Diene Monomers, Part 1", E.C.Leonard Ed., Wiley-Interscience, New York (1970) S.149 ff.

Geeignete Ester der Acryl-, Methacryl-, Fumar- oder Maleinsäure mit einer Wasserlöslichkeit von höchstens 2 g/l sind beispielsweise Butylacrylat, Ethylhexylacrylat, Ethylmethacrylat, Butylmethacrylat, Dibutylmaleat oder -fumarat und Diethylhexylmaleat oder -fumarat. Vorzugsweise werden Butylacrylat und/oder Ethylhexylacrylat verwendet.

Geeignete Ester mit einer Wasserlöslichkeit über 10 g/l sind beispielsweise Methylacrylat, Methylmethacrylat und Ethylacrylat. Besonders bevorzugt sind Ethylacrylat und/oder Methylmethacrylat.

Als Bestandteil des Gemisches b) eignen sich die Acryl-, Methacryl-, Itacon-, Fumar- und/oder Maleinsäure bzw. die entsprechenden Alkali- und Ammoniumsalze; deren Mono- und gegebenfalls Diamide, welche am Stickstoff ein oder zweifach durch die Methylolgruppe substituiert sein können; die Monoester der genannten Dicarbonsäuren mit C₁- bis C₃-Alkoholen; die Vinylsulfonate, die mit Sulfonatgruppen substituierten Ester und/oder Amide ungesättigter Carbonsäuren, mit Sulfonatgruppen substituierte Styrole; N-Vinylpyrrolidon, N-Vinylformamid und die mit Hydroxylgruppen substituierten Ester ungesättigter Carbonsäuren.

Bevorzugte wasserlösliche Monomere b) sind Acrylsäure, Methacrylsäure bzw. deren Alkali- und Ammoniumsalze, Acrylamid, Methacrylamid, N-Methylolacrylamid bzw. -methacrylamid, Vinylsulfonat, Hydroxyethylacrylat und mit Sulfonatgruppen substituierte Ester und/oder Amide der Acryl- bzw. Methacrylsäure, wie z.B. Sulfopropylmethacrylat. Besonders bevorzugt sind Acrylsäure, Methacrylsäure, Acrylamid und Methacrylamid.

Als olefinisch ungesättigte, hydrolysierbare Siliciumverbindungen c) eignen sich γ-Acryl- bzw. γ-Methacryloxypropyltri(alkoxy)silane und Vinyltrialkoxysilane, wobei als Alkoxygruppen z.B. Methoxy-, Ethoxy-, Methoxyethylen-, Ethoxyethylen-, Methoxypropylenglykolether- bzw. Ethoxypropylenglykolether-Reste eingesetzt werden können. Weiterhin ist das Trisacetoxyvinylsilan verwendbar. Besonders bevorzugt werden Vinyltriethoxysilan, γ-Methacryloxypropyltriethoxysilan und Trisacetoxyvinylsilan.

Geeignete radikalisch polymerisierbare, ungesättigte Monomere d) stellen beispielsweise die verzweigten oder unverzweigten Vinylester dar, deren Säurekomponente aus 2 bis 12 C-Atomen bestehen. Beispiele für die Komponente d) sind Vinylacetat, Vinylpropionat, Vinylpivalat, Vinylethylhexanoat, VeoVa^{R} 9 bzw. VeoVa^{R} 10 (Vinylester von α-verzweigten Carbonsäuren mit 9 bis 10 C-Atomen), 2-Ethylhexansäurevinylester und Pivalinsäurevinylester. Weitere geeignete Monomere d) stellen die monoolefinisch ungesättigten Mono- oder Dicarbonsäureester dar, deren Säurekomponente aus 3 bis 5 C-Atomen bestehen und deren Alkoholkomponente aus 1 bis 8 C-Atomen bestehen, beispielsweise Acryl- und/oder Methacrylester des Methanols, Ethanols, Butanols und/oder 2-Ethylhexanols wie Methylmethacrylat, Butylacrylat und/oder 2-Ethylhexylacrylat.

Die oben beschriebenen Monomere aus der Klasse der ungesättigten Vinylester und der monoolefinisch ungesättigten Mono- oder Dicarbonsäureester können gegebenfalls in Kombination mit Vinylchlorid und/oder Ethylen eingesetzt werden.

Als Monomere d) kommen weiterhin Vinylaromaten in Frage, vorzugsweise Styrol in Kombination mit Monomeren aus der Gruppe der monoolefinisch ungesättigten Mono- oder Dicarbonsäureester. In geringen Mengen können auch mehrfach ethylenisch ungesättigte Monomere wie Allylmethacrylat, Divinyladipat, Butandioldiacrylat und Triallylcyanurat in Mengen von 0 bis 2 Gew%, bevorzugt von 0.05 bis 0.5 Gew%, jeweils bezogen auf das Gesamtgewicht der Monomeren d), eingesetzt werden.

Vorzugsweise werden als Monomere d) Vinylacetat, VeoVa^{R} 9, VeoVa^{R} 10, Methylmethacrylat, Butylacrylat, 2-Ethylhexylacrylat, Vinylchlorid, Ethylen und/oder Styrol eingesetzt.

Vorzugsweise enthält das Kern-Hülle-Copolymerisat: 5 bis 15 Gew% eines Hüll-copolymerisats enthaltend
a) 80 bis 95 Gew%, bezogen auf das Gesamtgewicht der Hülle, Comonomer a), wovon 40 bis 60 Gew% Butylacrylat und/oder Ethylhexylacrylat und 60 bis 40 Gew%, jeweils bezogen auf das Gesamtgewicht der Comonomere a), Ethylacrylat, Methylacrylat und/oder Methylmethacrylat sind,
b) 5 bis 15 Gew%, bezogen auf das Gesamtgewicht der Hülle, Acrylsäure, Methacrylsäure, gegebenenfalls zusammen mit Acrylamid und/oder Methacrylamid,
c) 0.5 bis 10 Gew%, bezogen auf das Gesamtgewicht der Hülle, Vinyltriethoxysilan, γ-Methacryloxypropyltriethoxysilan und/oder Trisacetoxyvinylsilan, und 75 bis 95 Gew% eines Kern-Copolymerisats auf der Basis von Vinylchlorid/Ethylen-, Vinylchlorid/Ethylen/Vinylacetat-, Vinylchlorid/Ethylen/VeoVa9 und/oder VeoVa10-, Vinylacetat/Ethylen-, Vinylacetat/VeoVa9 und/oder VeoVa10-, Methylmethacrylat/Butylacrylat-, Methylmethacrylat/2-Ethylhexylacrylat-, Methylmethacrylat/Butylacrylat/VeoVa9 und/oder VeoVa10-, Styrol/Butylacrylat-, Styrol/Butylacrylat/VeoVa9 und/oder VeoVa10-, Styrol/2-Ethylhexylacrylat/VeoVa9 und/oder VeoVa10-, Styrol/2-Ethylhexylacrylat-Copolymerisaten.

Besonders bevorzugte Kern-Copolymerisate sind Vinylchlorid-Copolymerisate mit einem Ethylen-Gehalt von 5 bis 25 Gew%, welche gegebenenfalls noch 1 bis 40 Gew% Vinylacetat, VeoVa9 und/oder VeoVa10 enthalten; Vinylacetat-Copolymerisate mit 5 bis 25 Gew% Ethylen und/oder 1 bis 40 Gew% VeoVa9 und/oder VeoVa10; Methylmethacrylat-Copolymerisate mit 30 bis 60 Gew% Butylacrylat oder 2-Ethylhexylacrylat, welche gegebenenfalls noch 1 bis 20 Gew% VeoVa9 und/oder Veova10 enthalten; Styrol-Copolymerisate mit 30 bis 60 Gew% Butylacrylat oder 2-Ethylhexylacrylat, welche gegebenenfalls noch 1 bis 20 Gew% VeoVa9 und/oder VeoVa10 enthalten.

Gegenstand der Erfindung ist ein Verfahren zur Herstellung von Copolymerdispersionen, welche hydrolisierbare, siliciumorganische Comonomere enthalten, mit Festgehalten von 45 bis 65 %, durch radikalische Emulsionspolymerisation von 2 bis 25 Gew%, bezogen auf das Gesamtgewicht der Comonomere a), b), c) und d), einer Comonomermischung, enthaltend
a) 70 bis 95 Gew%, bezogen auf das Gesamtgewicht der Comonomere a), b) und c), Acrylsäure- und/oder Methacrylsäure(C₁-bis-C₁₀)alkylester, von denen 20 bis 80 Gew% eine Wasserlöslichkeit von höchstens 2 g/l und 80 bis 20 Gew%, jeweils bezogen auf die Comonomere a), eine Wasserlöslichkeit von mindestens 10 g/l aufweisen, mit
b) 5 bis 25 Gew%, bezogen auf das Gesamtgewicht der Comonomere a), b) und c), eines oder mehrerer ethylenisch ungesättigter, funktioneller und wasserlöslicher Monomeren mit einem Anteil von 25 bis 100 Gew%, bezogen auf die Comonomere b), an ungesättigten Carbonsäuren, und
c) 0.01 bis 10 Gew%, bezogen auf das Gesamtgewicht der Comonomere a), b) und c), einer oder mehrerer olefinisch ungesättigten, hydrolysierbaren Siliciumverbindungen der allgemeinen Formel R¹-Si(OR²)₃, worin R¹ einen in ω-Stellung olefinisch ungesättigten organischen Rest und R² gleiche oder verschiedene primäre und/oder sekundäre, gegebenfalls mit Alkoxygruppen substituierte Alkyl- oder Acylreste bedeuten,
wobei
die unter a), b), und c) genannten Bestandteile zusammen mit Wasser und Emulgator bei einem pH-Wert von 2 bis 5 in einem Reaktor vorgelegt werden,
die Polymerisation bei einer Temperatur von 40 bis 90°C durch Zugabe eines Initiators gestartet wird
und bei einem Umsatz von mindestens 50 % der unter a), b), und c) genannten Monomere mit der Dosierung von 75 bis 98 Gew%, bezogen auf das Gesamtgewicht der Comonomeren a), b), c) und d), eines oder mehrerer weiterer olefinisch ungesättigter Monomere d) aus der Gruppe der Vinylester, Acryl- und/oder Methacrylsäureester, Vinylchlorid, vinylaromatischen Verbindungen, Ethylen und weiterem Emulgator und/oder Initiator begonnen wird.

Das Verfahren kann so durchgeführt werden, daß entweder die Polymerisation der unter d) genannten Monomeren zusammen mit dem benötigten Emulgator bzw. Initiator direkt im Anschluß an die Herstellung des alkalilöslichen Schutzkolloids der ersten Stufe erfolgt, das heißt unmittelbar nach Beendigung der Dosierung des Comonomerengemisches aus a), b), und c), oder in einer separaten Stufe nachgeschaltet wird.

Geeignete Emulgatoren sind nichtionische und/oder anionische Tenside wie z.B.:
1) Alkylsulfate, besonders solche mit einer Kettenlänge von 8 bis 18 C-Atomen, Alkyl- und Alkylarylethersulfate mit 8 bis 18 C-Atomen im hydrophoben Rest und 1 bis 50 Ethylenoxideinheiten.
2) Sulfonate, besonders Alkylsulfonate mit 8 bis 18 C-Atomen, Alkylarylsulfonate mit 8 bis 18 C-Atomen, Ester und Halbester der Sulfobernsteinsäure mit einwertigen Alkoholen oder Alkylphenolen mit 4 bis 15 C-Atomen im Alkylrest; gegebenenfalls können diese Alkohole oder Alkylphenole auch mit 1 bis 40 Ethylenoxideinheiten ethoxyliert sein.
3) Phosphorsäureteilester und deren Alkali- und Ammoniumsalze, besonders Alkyl- und Alkylarylphosphate mit 8 bis 20 C-Atomen im organischen Rest, Alkylether- und Alkylaryletherphosphate mit 8 bis 20 C-Atomen im Alkyl- bzw. Alkylarylrest und 1 bis 50 EO-Einheiten.
4) Alkylpolyglykolether bevorzugt mit 8 bis 40 EO-Einheiten und Alkylresten von 8 bis 20 C-Atomen.
5) Alkylarylpolyglykolether bevorzugt mit 8 bis 40 EO-Einheiten und 8 bis 20 C-Atomen in den Alkyl-und Arylresten.
6) Ethylenoxid/Propylenoxid (EO/PO)-Blockcopolymere bevorzugt mit 8 bis 40 EO- bzw. PO-Einheiten.

Bevorzugte anionische Emulgatoren bei der Polymerisation des Gemisches aus a), b) und c) sind die Vertreter der Gruppen 1 und 2 mit weniger als 10 Ethylenoxideinheiten; besonders bevorzugt sind die ethylenoxidgruppenfreien Emulgatoren. Bevorzugte Emulgatoren bei Zugabe der Monomeren d) sind die ethoxylierten Vertreter der Gruppen 1 bis 5. Besonders bevorzugt sind die ethoxylierten Vertreter der Gruppe 1.

Die Polymerisation wird mit den üblicherweise eingesetzten Methoden gestartet. Besonders geeignet sind zumindest teilweise wasserlösliche, bevorzugt gänzlich wasserlösliche anorganische oder organische peroxidische Verbindungen, wie Peroxoverbindungen, Hydroperoxide und Perester sowie wasserlösliche Azoverbindungen. Genannt seien Alkali- oder Ammoniumperoxo(di)sulfate oder -phosphate, Wasserstoffperoxid, tertiär-Butylhydroperoxid, Azobiscyanovaleriansäure und tertiär-Butylpermaleinat. Die genannten Peroxide können auch gegebenfalls in bekannter Weise mit Reduktionsmitteln kombiniert werden. Geeignete Reduktionsmittel sind z.B. Alkaliformaldehydsulfoxylate (BRÜGGOLIT^{R}, RONGALIT^{R}), Alkalisulfite und -bisulfite, -thiosulfate und Ascorbinsäure. In bekannter Weise ist dann auch vielfach der Einsatz von geringen Mengen an Schwermetallsalzen, z.B. von Eisen-II-Salzen angebracht. Besonders bevorzugt ist die thermische Polymerisation mit Alkali- oder Ammoniumperoxo(di)sulfaten. Vorzugsweise wird eine Initiatormenge von 0.01 bis 1.0 Gew%, bezogen auf das Gesamtgewicht der Comonomeren, eingesetzt.

Es können weitere übliche Hilfsmittel, wie Puffersubstanzen, Regler oder Inhibitoren, gegen vorzeitige Polymerisation eingesetzt werden.

Im folgenden wird eine besonders bevorzugte Ausführungsform des Verfahrens näher beschrieben:

Die unter b) genannten Monomeren werden zusammen mit entionisiertem Wasser, 0.5 bis 10, vorzugsweise 1 bis 5, Gewichtsteilen eines vorzugsweise anionischen Emulgators oder Emulgatorgemisches und gegebenfalls weiteren üblichen Zusätzen, wie Puffern, Reglern und Inhibitoren, vorgelegt und ein pH-Wert von 2 bis 5, vorzugsweise von 2.5 bis 4, durch Zugabe von bevorzugt flüchtigen Säuren oder Basen wie z.B. Ameisensäure oder Ammoniak eingestellt. Nach Zugabe der unter a) und c) genannten Monomeren und Einstellen der Polymerisationstemperatur von 40 bis 90°C, bevorzugt 60 bis 80°C, wird die Polymerisation durch Zugabe eines Initiators gestartet.

Sobald die unter a) bis c) genannten Monomeren zu 40 bis 99 %, vorzugsweise zu 50 bis 95 %, umgesetzt sind, wird mit der Dosierung der unter d) genannten Monomeren, des restlichen Emulgators und des restlichen Wassers in Form einer Präemulsion begonnen; gegebenfalls wird Ethylen aufgedrückt. Bei der Copolymerisation von Ethylen hält man den Ethylendruck vorzugsweise während der Polymerisation konstant bei 40 bis 80 bar, bevorzugt bei 50 bis 70 bar, und läßt ihn gegen Ende der Polymerisation durch Schließen der Ethylenzufuhr abfallen.

Nach Beendigung der Zugabe der Bestandteile d) wird die Zufuhr vom Initiator aufrechterhalten, bis die eingesetzten Monomere bis auf gegebenfalls verwendetes Ethylen zu mehr als 98 %, bevorzugt mehr als 99 %, umgesetzt sind. Anschließend wird der pH-Wert der Dispersion auf Werte zwischen 6 und 10, bevorzugt zwischen 7 und 9, eingestellt, gegebenfalls noch vorhandener Überdruck abgelassen, die Dispersion durch Anlegen von Vakuum entgast, gegebenfalls in bekannter Weise gestrippt und anschließend abgekühlt.

Insbesonders werden bei der Copolymerisation von Ethylen in das Kernpolymerisat 1 bis 10 Gew% der Monomeren d) zusammen mit den Monomeren a), b) und c) als nicht oder in nur geringem Ausmaß mit den Comonomeren a), b) und c) copolymerisierbares Quellmittel vorgelegt. Dazu können nur solche Comonomere d) eingesetzt werden, die unter den Bedingungen der Polymerisation des Hüllpolymerisats mit den Monomeren a), b) oder c) nicht oder nur in geringem Ausmaß copolymerisieren. Dies sind Vinylacetat und Vinylester von Carbonsäuren mit 5 bis 10 C-Atomen wie Vinylpivalat, Vinylethylhexanoat, VeoVa9^{R}, Veova10^{R}.

Die erfindungsgemäß hergestellten Dispersionen eignen sich zur Herstellung von kunststoffgebundenen Putzen mit guter Wasserbeständigkeit, Vollwärmeschutzsystemen und von Farben für Innen- und Außenanstriche mit guter Scheuerbeständigkeit. Weiterhin eignen sich die Dispersionen besonders zur Herstellung von wasserfesten Dispersionsfliesenklebern.

Die nachfolgenden Beispiele dienen zur weiteren Erläuterung der Erfindung.

### A) Herstellung der Ausgangsdispersionen

### Beispiel 1:

In einen Rührautoklaven mit ca. 16 1 Inhalt wurden 4120 ml entionisiertes Wasser, 260 g einer 15 Gew-%igen wäßrigen Natrium-Alkylbenzolsulfonatlösung, 130 g einer 30 Gew%-igen wäßrigen Acrylamidlösung und 81 g Methacrylsäure gegeben. Der pH-Wert wurde mit verdünntem NH₃ auf 3.5 eingestellt. Anschließend wurde evakuiert, mit Stickstoff gespült, erneut evakuiert und ein Gemisch aus 400 g Butylacrylat, 400 g Methylmethacrylat, 340 g VeoVa10^{R} und 23 g Methacryloxypropyltrimethoxysilan (Silan GF 31, Wacker-Chemie GmbH) eingesaugt. Dieses Gemisch war durch Zugabe von 170 mg Benzochinon gegen vorzeitige Polymerisation stabilisiert. Nach Aufheizen auf 70°C wurden 100 ml 20 Gew%-ige wäßrige Ammoniumpersulfatlösung innerhalb von 3 Minuten zugegeben. 20 Minuten später waren die vorgelegten Monomeren zu 55 % umgesetzt. Zu diesem Zeitpunkt wurden 65 bar Ethylen aufgedrückt. Gleichzeitig begann die Dosierung von 20 Gew%-iger wäßriger Ammonpersulfatlösung mit einer Rate von 60 ml/h und einer Voremulsion aus 2780 g Wasser, 960 g einer 35 Gew%-igen wäßrigen Lösung eines Nonylphenolpolyethylenoxidsulfats mit ca. 25 Mol Ethylenoxid pro Mol Emulgator und 6540 g Vinylchlorid. Der pH-Wert wurde in dieser Zeit durch NH₃-Zugabe zwischen 5 bis 6 und der Ethylendruck bei 65 bar gehalten.
Nach Beendigung der Voremulsionsdosierung wurden Ethylen- und Initiatordosierung gestoppt und der Reaktorinhalt noch eine Stunde bei 70°C gehalten. Nach Einstellen des pH-Werts auf 8.5 durch Ammoniakzugabe wurde Ethylen abgeblasen und die Dispersion eine Stunde im Vakuum gerührt.
Die Analysen ergaben einen Ethylengehalt von ca. 15 %, einen Festgehalt von 47.9 % und eine Viskosität (Brookfield-Viskosimeter, 20°C, 20 Upm) von 700 mPa.s. Das Produkt zeigte eine Mindestfilmbildungstemperatur von 25°C.

### Beispiel 2:

In der Rezeptur von Beispiel 1 wurden bei der Herstellung der ersten Stufe 53.5 g Methacryloxypropyltrimethoxysilan eingesetzt. Es wurde eine Dispersion mit einem Festgehalt von 51.1 % und einer Viskosität von 100 mPa.s erhalten. Die Dispersion zeigte eine Mindestfilmbildungstemperatur von 25°C.

### Beispiel 3:

In der Rezeptur von Beispiel 1 wurde bei der Herstellung der ersten Stufe das Methacryloxypropyltrimethoxysilan durch 77 g Vinyltriethoxysilan (Silan GF56, Wacker Chemie GmbH) ersetzt. Es wurde eine 49.8 %-ige Dispersion mit einer Viskosität von 140 mPa.s erhalten. Die Mindestfilmbildungstemperatur betrug 31°C.

### Beispiel 4:

In einem 2.4 1 Laborautoklaven wurden 66 g Butylacrylat, 66 g Methylmethacrylat, 55 g VeoVa^{R}10, 6.3 g Methacryloxypropyltrimethoxysilan, 21.9 g einer 30 Gew%-igen Acrylamidlösung, 13.2 g Methacrylsäure und 43.7 g einer 15 Gew%-igen Lösung eines Alkylsulfonats in 520 ml Wasser vorgelegt; Ethylen wurde nicht aufgedrückt. Die Reaktion wurde durch Zugabe von Ammonpersulfat bei 71°C gestartet. Bei einem Festgehalt von 17 % wurde eine Emulsion aus 537 g Methylmethacrylat, 537 g Butylacrylat, 159 g einer 35 Gew%-igen Lösung eines sulfatierten Nonylphenolethoxylats mit ca. 25 EO-Einheiten in 458 g Wasser gestartet. Es wurde eine Dispersion mit einem Festgehalt von 52.8 % und einer Viskosität von 2000 mPa.s erhalten; die Mindestfilmbildungstemperatur betrug 12°C.

### Beispiel 5:

Die Rezeptur von Beispiel 4 wurde in folgenden Punkten abgeändert:
In der Monomerdosierung wurde anstelle von Methylmethacrylat/Butylacrylat ein Gemisch aus 524 g Styrol und 524 g Butylacrylat verwendet. Es wurde eine 51.8 %-ige Dispersion mit einer Viskosität von 6500 mPa.s erhalten; die Mindestfilmbildungstemperatur betrug 13°C.

### Beispiel 6:

Die Rezeptur von Beispiel 1 wurde in folgenden Punkten abgeändert:
In der Monomervorlage wurden 15 g Methacryloxypropyltrimethoxysilan eingesetzt. In der Monomerdosierung wurden zusätzlich 340 g VeoVa^{R}10 verwendet, die Wassermenge wurde entsprechend erhöht. Es wurde eine 52.3 %-ige Dispersion mit einer Viskosität von 3180 mPa.s erhalten; die Mindestfilmbildungstemperatur betrug 24°C.

### Beispiel 7:

Die Rezeptur von Beispiel 4 wurde in folgenden Punkten abgeändert:
In der Monomerdosierung wurde anstelle von Methylmethacrylat/Butylacrylat ein Gemisch aus 322 g VeoVa^{R}9 und 749 g Vinylacetat verwendet. Es wurde eine 52.3 %-ige Dispersion mit einer Viskosität von 490 mPa.s erhalten; die Mindestfilmbildungstemperatur betrug 25°C.

### Vergleichsbeispiel 1:

Die Rezeptur von Beispiel 1 wurde dahingehend abgeändert, daß bei der Herstellung in der Monomervorlage kein Methacryloxypropyltrimethoxysilan eingesetzt wurde. Es wurde eine Dispersion mit einem Festgehalt von 52 % bei einer Viskosität von 2500 mPa.s erhalten; die Mindestfilmbildungstemperatur betrug 19°C.

### Vergleichsbeispiel 2:

Die Rezeptur von Beispiel 1 wurde dahingehend abgeändert, daß in der Monomervorlage anstelle des Gemisches von Methylmethacrylat und Butylacrylat nur Butylacrylat verwendet wurde. Der Ansatz koagulierte beim Abblasen.

### Vergleichsbeispiel 3:

Die Rezeptur von Beispiel 4 wurde dahingehend abgeändert, daß bei der Herstellung in der Monomervorlage kein Methacryloxypropyltrimethoxysilan verwendet wurde. Es wurde eine Dispersion mit einem Festgehalt von 52.7 % bei einer Viskosität von 7050 mPa.s erhalten. Die Mindestfilmbildungstemperatur betrug 13°C.

### Vergleichsbeispiel 4:

Die Rezeptur von Beispiel 5 wurde dahingehend abgeändert, daß in der Monomervorlage kein Methacryloxypropyltrimethoxysilan verwendet wurde. Es wurde eine Dispersion mit einem Festgehalt von 52 % bei einer Viskosität von 11800 mPa.s erhalten. Die Mindestfilmbildungstemperatur betrug 14°C.

### Vergleichsbeispiel 5:

Die Rezeptur von Beispiel 7 wurde dahingehend abgeändert, daß in der Monomervorlage kein Methacryloxypropyltrimethoxysilan verwendet wurde. Es wurde eine Dispersion mit einem Festgehalt von 52.2 % bei einer Viskosität von 1325 mPa.s erhalten. Die Mindestfilmbildungstemperatur betrug 26°C.

### Vergleichsbeispiel 6:

Die Rezeptur von Beispiel 1 wurde dahingehend abgeändert, daß in der Monomervorlage kein Methacryloxypropyltrimethoxysilan verwendet wurde; in der Dosierung wurden 77 g Vinyltriethoxysilan verwendet. Es wurde eine Dispersion mit einem Festgehalt von 49.3 % bei einer Viskosität von 1360 mPa.s erhalten.

### B) Anwendungstechnische Prüfung:

Zur anwendungstechnischen Prüfung wurden die Dispersionen aus den Beispielen bzw. Vergleichsbeispielen in einer Rezeptur für Fliesenkleber und einer Rezeptur für Putze getestet.

Prüfrezeptur für Dispersionsfliesenkleber:
- Teile: Stoff
- 0.20: Wasser
- 0.10: Konservierungsmittel (Parmetol DF 12)
- 0.15: Dispergiermittel (Styrodex PK 90)
- 0.20: Verdickungsmittel (Tylose MHP 30000yp)
- 0.25: Verdickungsmittel (Rohagit SD 15)
- 0.05: Dispergierhilfsmittel (AMP 90)
- 0.15: Ammoniak
- 0.15: Entschäumer (Agitan 281)
- 51.80: CaCO₃-Füllstoff (Durcal 40)
- 8.50: CaCO₃-Füllstoff (Durcal 10)
- 37.75: Dispersion (Festgehalt 50 Gew%)

Die Klebemittel der obengenannten Rezeptur wurden mit Weichmacher (1/1-Mischung aus Dowanol DPnB und Dowanol PnB) auf eine Mindestfilmbildetemperatur von 0°C eingestellt.

Mit den Klebemitteln der obengenannten Rezeptur wurden Keramikfliesen auf Beton verklebt und die Haftzugfestigkeit der verklebten Fliesen nach unterschiedlichen Lagerzyklen gemäß DIN 18156 geprüft. Die Prüfergebnisse sind in Tabelle 1 zusammengefaßt:

**Tabelle 1:**

| Probe | Haftzugfestigkeit [N/mm²] | |
|---|---|---|
| | 28 Tage Normklima | 28 Tage Normklima/21 Tage Wasserlagerung |
| Beispiel 1 | 1.40 | 0.71 |
| Beispiel 2 | 1.57 | 0.74 |
| Beispiel 3 | 1.74 | 0.67 |
| Beispiel 4 | 1.21 | 0.32 |
| Beispiel 5 | 1.29 | 0.45 |
| Beispiel 6 | 1.84 | 0.59 |
| Beispiel 7 | 1.72 | 0.38 |
| Vergleichsbsp. 1 | 1.35 | 0.14 |
| Vergleichsbsp. 3 | 1.30 | < 0.10 |
| Vergleichsbsp. 4 | 1.38 | 0.12 |
| Vergleichsbsp. 5 | 1.79 | < 0.10 |
| Vergleichsbsp. 6 | 1.53 | 0.12 |

Prüfrezeptur für Putze:
- Teile: Stoff
- 2.50: Konservierungsmittel (Parmetol DF 12)
- 2.50: Entschäumer (Bevaloid 677)
- 32.0: Celluloseverdicker (Walcocel MW 3000 GB 3%ig)
- 0.10: Netzmittel (Calgon N trocken)
- 30.0: Titandioxid (RN 56)
- 150.0: Glimmer-Füllstoff (Plastorit 0.5)
- 30.0: Dolomit-Füllstoff (Microdol 820)
- 150.0: Schwerspat-Füllstoff (Fleur)
- 100.0: Quarzmehl (W 4)
- 140.0: Kristallquarzsand (Nr. 8a)
- 50.0: Kristallquarzsand (Nr. 4 extra)
- 150.0: Dispersion (Festgehalt 50 Gew%)

Die obengenannten Rezepturen wurden mit 3.0 bis 6.5 Teilen Butyldiglykolacetat auf eine Mindestfilmbildetemperatur von 0°C eingestellt und zur Herstellung der Putze mit Wasser auf 1000 Teile aufgefüllt.

Zur Bestimmung der Putzerweichung wurde die Eindringtiefe nach Buchholz (DIN 53153) bestimmt und der Mittelwert aus 5 Messungen ermittelt.
Die Putzhaftung wurde manuell mit einem Spatel bestimmt und qualitativ mit abnehmender Haftung von 1 bis 6 benotet. Die Ergebnisse sind in Tabelle 2 zusammengefaßt.

**Tabelle 2:**

| Probe | Putzerweichen [mm] | Putzhaftung Note |
|---|---|---|
| Beispiel 1 | 3.5 | 2.5 |
| Beispiel 2 | 3.0 | 2.5 |
| Beispiel 4 | 4.5 | 2.0 |
| Beispiel 5 | 4.5 | 2.0 |
| Beispiel 7 | 2.5 | 1.0 |
| Vergleichsbsp. 1 | 4.5 | 3.5 |
| Vergleichsbsp. 3 | 4.5 | 4.0 |
| Vergleichsbsp. 4 | 5.5 | 5.0 |
| Vergleichsbsp. 5 | 4.5 | 3.0 |
| Vergleichsbsp. 6 | 4.5 | 3.0 |

### Prüfung der Wasseraufnahme:

Die Dispersionen wurde mit einer Naßfilmstärke von 500 µm auf eine Polypropylenfolie aufgezogen und bei Raumtemperatur getrocknet. Nach Ablösung des Films von der Folie wurden 5 x 5 cm große Probenkörper ausgestanzt und deren Trockengewicht bestimmt. Die Probenkörper wurden 1 bzw. 21 Tage in destilliertem Wasser gelagert und danach mit einem Papiertuch leicht getrocknet. Die Wasseraufnahme, bezogen auf das Anfangsgewicht des Probenkörpers, wurde durch Wägung bestimmt; die Zunahme in Gew% ist in Tabelle 3 aufgeführt.

**Tabelle 3:**

| Probe | Wasseraufnahme nach 1 Tag [%] | Wasseraufnahme nach 21 Tagen [%] |
|---|---|---|
| Beispiel 1 | 12 | 17 |
| Beispiel 2 | 7 | 3 |
| Beispiel 4 | 21 | 16 |
| Beispiel 5 | 19 | 15 |
| Beispiel 7 | 47 | 63 |
| Vergleichsbsp. 1 | 12 | 82 |
| Vergleichsbsp. 3 | 42 | 70 |
| Vergleichsbsp. 4 | 24 | 111 |
| Vergleichsbsp. 5 | 60 | 112 |
| Vergleichsbsp. 6 | 19 | 45 |

## Patentansprüche

1. Verfahren zur Herstellung von Kern-Hülle-Copolymerisat-Dispersionen, mit Festgehalten von 45 bis 65 %, deren Hülle hydrolysierbare, siliciumorganische Comonomere enthält, durch radikalische Emulsionspolymerisation von 2 bis 25 Gew%, bezogen auf das Gesamtgewicht der Comonomere a), b), c) und d), einer Comonomermischung, enthaltend
a) mindestens 70 Gew%, bezogen auf das Gesamtgewicht der Comonomere a), b) und c), Acrylsäure- und/oder Methacrylsäure(C₁-bis-C₁₀)alkylester, von denen 20 bis 80 Gew% eine Wasserlöslichkeit von höchstens 2 g/l und 80 bis 20 Gew%, jeweils bezogen auf die Comonomere a), eine Wasserlöslichkeit von mindestens 10 g/l aufweisen, mit
b) 5 bis 25 Gew%, bezogen auf das Gesamtgewicht der Comonomere a), b) und c), eines oder mehrerer ethylenisch ungesättigter, funktioneller und wasserlöslicher Monomeren mit einem Anteil von 25 bis 100 Gew%, bezogen auf die Comonomere b), an ungesättigten Carbonsäuren, und
c) 0.01 bis 10 Gew%, bezogen auf das Gesamtgewicht der Comonomere a), b) und c), einer oder mehrerer olefinisch ungesättigter, hydrolysierbarer Siliciumverbindungen der allgemeinen Formel R¹-Si(OR²)₃, worin R¹ einen in ω-Stellung olefinisch ungesättigten organischen Rest und R² gleiche oder verschiedene primäre und/oder sekundäre, gegebenfalls mit Alkoxygruppen substituierte Alkyl- oder Acylreste bedeuten, wobei
die unter a), b) und c) genannten Bestandteile zusammen mit Wasser und Emulgator bei einem pH von 2 bis 5 in einem Reaktor vorgelegt werden,
die Polymerisation bei einer Temperatur von 40 bis 90°C durch Zugabe eines Initiators gestartet wird und bei einem Umsatz von mindestens 50 % der unter a), b) und c) genannten Monomere mit der Dosierung von 75 bis 98 Gew%, bezogen auf das Gesamtgewicht der Comonomeren a), b), c) und d), eines oder mehrerer weiterer olefinisch ungesättigter Monomere d) aus der Gruppe der Vinylester, Acryl- und/oder Methacrylsäureester, Vinylchlorid, vinylaromatischen Verbindungen, Ethylen und weiterem Emulgator und/oder Initiator begonnen wird.

2. Verfahren nach Anspruch 1, dadurch gekennzeichnet, daß 5 bis 15 Gew%, bezogen auf das Gesamtgewicht der Comonomere a), b), c) und d), einer Comonomermischung, enthaltend
a) mindestens 80 Gew%, bezogen auf das Gesamtgewicht der Comonomere a), b) und c), Comonomer a), wovon 40 bis 60 Gew% Butylacrylat und/oder Ethylhexylacrylat und 60 bis 40 Gew%, jeweils bezogen auf das Gesamtgewicht der Comonomere a), Ethylacrylat und/oder Methylmethacrylat sind,
b) 5 bis 15 Gew%, bezogen auf das Gesamtgewicht der Comonomere a), b) und c), Acrylsäure, Methacrylsäure, gegebenenfalls zusammen mit Acrylamid und/oder Methacrylamid,
c) 0.5 bis 10 Gew%, bezogen auf das Gesamtgewicht der Comonomere a), b) und c), Vinyltriethoxysilan, γ-Methacryloxypropyltriethoxysilan und/oder Trisacetoxyvinylsilan,
vorgelegt werden.

3. Verfahren nach Anspruch 1 oder 2, dadurch gekennzeichnet, daß 75 bis 95 Gew%, bezogen auf das Gesamtgewicht der Comonomeren a), b), c) und d), eines oder mehrerer Monomere d) aus der Gruppe umfassend Vinylchlorid, Ethylen, Vinylacetat, Vinylester von α-verzweigten Carbonsäuren mit 9 und/oder 10 C-Atomen, Methylmethacrylat, Butylacrylat, 2-Ethylhexylacrylat, Styrol zudosiert werden.

4. Verfahren nach Anspruch 1 bis 3, dadurch gekennzeichnet, daß die unter b) genannten Monomeren zusammen mit entionisiertem Wasser, 0.5 bis 10 Gewichtsteilen eines vorzugsweise anionischen Emulgators oder Emulgatorgemisches vorgelegt werden und ein pH-Wert von 2 bis 5 eingestellt wird,
nach Zugabe der unter a) und c) genannten Monomeren und Einstellen der Polymerisationstemperatur von 40 bis 90°C die Polymerisation durch Zugabe eines Initiators gestartet wird, und,
sobald die unter a) bis c) genannten Monomeren zu 40 bis 99 % umgesetzt sind, mit der Dosierung der unter d) genannten Monomeren, des restlichen Emulgators und des restlichen Wassers in Form einer Präemulsion begonnen wird, und
nach Beendigung der Zugabe der Bestandteile d) die Zufuhr vom Initiator aufrechterhalten wird, bis die eingesetzten Monomeren, bis auf gegebenfalls verwendetes Ethylen, zu mehr als 98 %, bevorzugt mehr als 99 %, umgesetzt sind.

5. Verfahren nach Anspruch 1 bis 4, dadurch gekennzeichnet, daß bei der Copolymerisation von Ethylen in das Kernpolymerisat 1 bis 10 Gewichtsprozent der Monomeren d) zusammen mit den Monomeren a), b) und c) als Quellmittel vorgelegt werden, wobei nur solche Comonomere d) vorgelegt werden, die unter den Bedingungen der Polymerisation des Hüllpolymerisats mit den Monomeren a), b) oder c) nicht oder in nur geringem Ausmaß copolymerisieren, wie Vinylpivalat, Vinylethylhexanoat, Vinylester von α-verzweigten Carbonsäuren mit 9 oder 10 C-Atomen.

## Claims

1. Process for the preparation of core/shell copolymer dispersions having solids contents of from 45 to 65% whose shell comprises hydrolysable organosilicon comonomers, by free-radical emulsion polymerization of from 2 to 25% by weight, based on the overall weight of the comonomers a), b), c) and d), of a comonomer mixture comprising
a) at least 70% by weight, based on the overall weight of the comonomers a), b) and c), of acrylic and/or methacrylic (C₁-to-C₁₀) alkyl esters of which from 20 to 80% by weight have a water-solubility of not more than 2 g/l and from 80 to 20% by weight, based in each case on the monomers a), have a water-solubility of at least 10 g/l, with
b) from 5 to 25% by weight, based on the overall weight of the comonomers a), b) and c), of one or more ethylenically unsaturated, functional and water-soluble monomers including a proportion of from 25 to 100% by weight, based on the comonomers b), of unsaturated carboxylic acids, and
c) from 0.01 to 10% by weight, based on the overall weight of the comonomers a), b) and c), of one or more olefinically unsaturated, hydrolysable silicon compounds of the general formula R¹-Si(OR²)₃ in which R¹ is an organic radical which is olefinically unsaturated in the ω-position, and R², which is identical or different at each occurrence, is a primary and/or secondary alkyl or acyl radical which is optionally substituted with alkoxy groups,
in which the constituents mentioned under a), b) and c), together with water and emulsifier, are initially charged to a reactor at a pH of from 2 to 5,
polymerization is begun at a temperature of from 40 to 90°C by adding an initiator,
and, at a degree of conversion of at least 50% of the monomers mentioned under a), b) and c), the metered addition is begun of from 75 to 98% by weight, based on the overall weight of the comonomers a), b), c) and d), of one or more further olefinically unsaturated monomers d) from the group consisting of vinyl esters, acrylic and/or methacrylic esters, vinyl chloride, aromatic vinyl compounds and ethylene, and further emulsifier and/or initiator.

2. Process as claimed in Claim 1, characterized in that from 5 to 15%, based on the overall weight of the comonomers a), b), c) and d), of a comonomer mixture comprising
a) at least 80% by weight, based on the overall weight of the comonomers a), b) and c), of comonomer a), of which from 40 to 60% by weight comprises butyl acrylate and/or ethylhexyl acrylate and from 60 to 40% by weight, based in each case on the overall weight of the comonomers a), comprises ethyl acrylate and/or methyl methylacrylate,
b) from 5 to 15% by weight, based on the overall weight of the comonomers a), b) and c), of acrylic acid and/or methacrylic acid, together if desired with acrylamide and/or methacrylamide,
c) from 0.5 to 10% by weight, based on the overall weight of the comonomers a), b) and c), of vinyltriethoxysilane, γ-methacryloxypropyltriethoxysilane and/or trisacetoxyvinylsilane, are introduced as initial change.

3. Process as claimed in Claim 1 or 2, characterized in that from 75 to 95% by weight, based on the overall weight of the comonomers a), b), c) and d), of one or more monomers d) from the group comprising vinyl chloride, ethylene, vinyl acetate, vinyl esters of α-branched carboxylic acids having 9 and/or 10 carbon atoms, methyl methacrylate, butyl acrylate, 2-ethylhexylacrylate and styrene are metered in.

4. Process as claimed in Claims 1 to 3, characterized in that the monomers mentioned under b) are introduced as initial charge together with deionized water, from 0.5 to 10 parts by weight of a preferably anionic emulsifier or emulsifier mixture, and a pH of from 2 to 5 is established,
after addition of the monomers mentioned under a) and c) and the establishment of the polymerization temperature of from 40 to 90°C, the polymerization is begun by adding an initiator, and
as soon as the monomers mentioned under a) to c) have reacted to the extent of from 40 to 99%, the metered addition of the monomers mentioned under d), of the remaining amount of emulsifier and the remaining amount of water in the form of a preemulsion is commenced, and after the end of the addition of the constituents d), the supply of initiator is maintained until the monomers employed, except for any ethylene used, have reacted to the extent of more than 98%, preferably more than 99%.

5. Process as claimed in Claims 1 to 4, characterized in that, in the case of the copolymerization of ethylene into the core polymer, from 1 to 10% by weight of the monomers d) are initially introduced together with the monomers a), b) and c) as a swelling agent, in which context the comonomers d) employed can only be those which under the conditions of the polymerization of the shell polymer do not, or not to any great extent, undergo copolymerization with the monomers a), b) or c), such as vinyl pivalate, vinyl ethylhexanoate, vinyl esters of α-branched carboxylic acids having 9 or 10 carbon atoms.

## Revendications

1. Procédé de préparation de dispersions de copolymères à noyau et enveloppe, avec une teneur en matière solide de 45 à 65%, dont l'enveloppe contient des comonomères organosiliciques hydrolysables, par polymérisation radicalaire en émulsion de 2 à 25% en poids, sur base du poids total des comonomères a), b), c) et d), d'un mélange de comonomères, contenant
a) au moins 70% en poids, sur base du poids total des comonomères a), b) et c), d'ester alcoylique (en C₁ à C₁₀) d'acides acrylique et/ou méthacrylique, dont 20 à 80% en poids présentent une solubilité dans l'eau de au maximum 2 g/l et 80 à 20% en poids, chaque fois sur base du comonomère a), présentent une solubilité dans l'eau de au moins 10 g/l, avec
b) 5 à 25% en poids, sur base du poids total des comonomères a), b) et c), d'un ou de plusieurs monomères solubles dans l'eau, éthyléniquement insaturés, fonctionnels, avec une quantité de 25 à 100% en poids, sur base du poids total du comonomère b), d'acides carboxyliques insaturés, et
c) 0,01 à 10% en poids, sur base du poids total des comonomères a), b) et c), d'un ou de plusieurs composés siliciques hydrolysables, oléfiniquement insaturés, de formule générale R¹-Si(OR²)₃, où R¹ représente un radical organique oléfiniquement insaturé en position ω et R² représente des radicaux alcoyle ou acyle, identiques ou différents, primaires et/ou secondaires, facultativement substitués par des radicaux alcoxy, où les constituants cités sous a), b) et c) sont disposés dans un réacteur avec de l'eau et un émulsionnant, à un pH de 2 à 5,
la polymérisation est commencée à une température de 40 à 90°C par addition d'un initiateur, et
à un taux de conversion d'au moins 50% des monomères cités sous a), b) et c), on commence l'addition de 75 à 98% en poids, sur base du poids total des comonomères a), b), c) et d), d'un ou de plusieurs autres monomères oléfiniquement insaturés d) parmi le groupe des esters vinyliques, esters d'acides acrylique et/ou méthacrylique, chlorure de vinyle, composés vinylaromatiques, éthylène, et d'autres émulsionnants et/ou initiateurs.

2. Procédé suivant la revendication 1, caractérisé en ce que l'on prédispose 5 à 15% en poids, sur base du poids total des comonomères a), b), c) et d), d'un mélange de comonomères contenant
a) au moins 80% en poids, sur base du poids total des comonomères a), b) et c), de comonomère a), qui sont 40 à 60% en poids d'acrylate de butyle et/ou d'acrylate d'éthylhexyle et 60 à 40% en poids, chaque fois sur base du poids total du comonomère a), d'acrylate d'éthyle et/ou de méthacrylate de méthyle,
b) 5 à 15% en poids, sur base du poids total des comonomères a), b) et c), d'acide acrylique, acide méthacrylique, facultativement avec de l'acrylamide et/ou du méthacrylamide, et
c) 0,5 à 10% en poids, sur base du poids total des comonomères a), b) et c), de vinyltriéthoxysilane, γ-méthacryloxypropyltriéthoxysilane et/ou trisacétoxyvinylsilane.

3. Procédé suivant la revendication 1 ou 2, caractérisé en ce que l'on ajoute 75 à 95% en poids, sur base du poids total des comonomères a), b), c) et d), un ou plusieurs monomères d) du groupe comprenant le chlorure de vinyle, l'éthylène, l'acétate de vinyle les esters vinyliques d'acides carboxyliques α-ramifiés avec 9 et/ou 10 atomes de carbone, le méthacrylate de méthyle, l'acrylate de butyle, l'acrylate de 2-éthylhexyle et le styrène.

4. Procédé suivant les revendications 1 à 3, caractérisé en ce que les monomères cités sous b) sont disposés avec de l'eau déminéralisée, 0,5 à 10 parties en poids d'un émulsionnant ou d'un mélange d'émulsionnants, de préférence anioniques et en ce que l'on ajuste le pH entre 2 et 5,
après addition des monomères cités sous a) et c) et ajustage de la température de polymérisation entre 40 et 90°C, on commence la polymérisation par addition d'un initiateur, et
lorsque 40 à 99% des monomères mentionnés sous a) à c) ont réagi, on commence l'addition des monomères cités sous d), le reste d'émulsionnant et le reste d'eau sous forme d'une préémulsion, et
après achèvement de l'addition des constituants d), on recommence l'addition de l'initiateur jusqu'à ce que les monomères utilisés, sauf pour l'éthylène facultativement utilisé, aient réagi à plus de 98%, de préférence plus de 99%.

5. Procédé suivant les revendications 1 à 4, caractérisé en ce que, lors de la copolymérisation d'éthylène dans le polymère du noyau, on dispose 1 à 10% en poids des monomères d) avec les monomères a), b) et c) comme agent de gonflement, où l'on ne dispose que les comonomères d) qui ne copolymérisent pas ou seulement dans une faible mesure, dans les conditions de polymérisation du polymère d'enveloppe, avec les monomères a), b) ou c), comme le pivalate de vinyle, l'éthylhexanoate de vinyle, les esters vinyliques d'acides carboxyliques α-ramifiés avec 9 à 10 atomes de carbone.
